# EUROPEAN PATENT SPECIFICATION

(11) **EP 2 749 943 B1**
(45) Date of publication and mention of the grant of the patent: **13.06.2018**
(21) Application number: 12828624.2
(22) Date of filing: 10.08.2012
(51) Int. Cl.: G03B 21/20, G03B 33/12, G02B 27/10

(54) **PROJECTION SYSTEM AND LIGHT EMITTING DEVICE THEREOF**
PROJEKTIONSSYSTEM UND LICHTEMITTIERENDE VORRICHTUNG DAFÜR
SYSTÈME DE PROJECTION ET DISPOSITIF ÉLECTROLUMINESCENT DE CELUI-CI

(30) Priority: 27.08.2011 CN 201110249345
(43) Date of publication of application: 02.07.2014
(73) Proprietor: Appotronics Corporation Limited, Shenzhen, Guangdong 518055 (CN)
(72) Inventor: HU, Fei, Shenzhen, Guangdong 518055 (CN); LI, Yi, Shenzhen, Guangdong 518055 (CN); YANG, Yi, Shenzhen, Guangdong 518055 (CN)
(74) Representative: Gulde & Partner
(86) International application number: PCT/CN2012/079954
(87) International publication number: WO 2013/029463

(56) References cited:
- WO-A1-2011/092841
- WO-A2-2007/143347
- CN-A- 101 825 836
- CN-A- 101 995 748
- CN-A- 102 023 468
- CN-A- 102 073 115
- CN-A- 102 141 721
- CN-A- 102 193 296
- US-A1- 2011 051 102

## Description

### Field of the Invention

This invention relates to optical technology, and in particular, it relates to a projection system and a light emitting device thereof.

### Description of the Related Art

Currently, in projectors ultra-high pressure lamp (UHP lamp) is widely used as the light source, which gets visible light by employing ultra-high pressure mercury vapor (more than IMpa) discharge. However, the mercury leads to environment pollution, so the industry is looking for an environment-friendly light source to replace the UHP lamp.

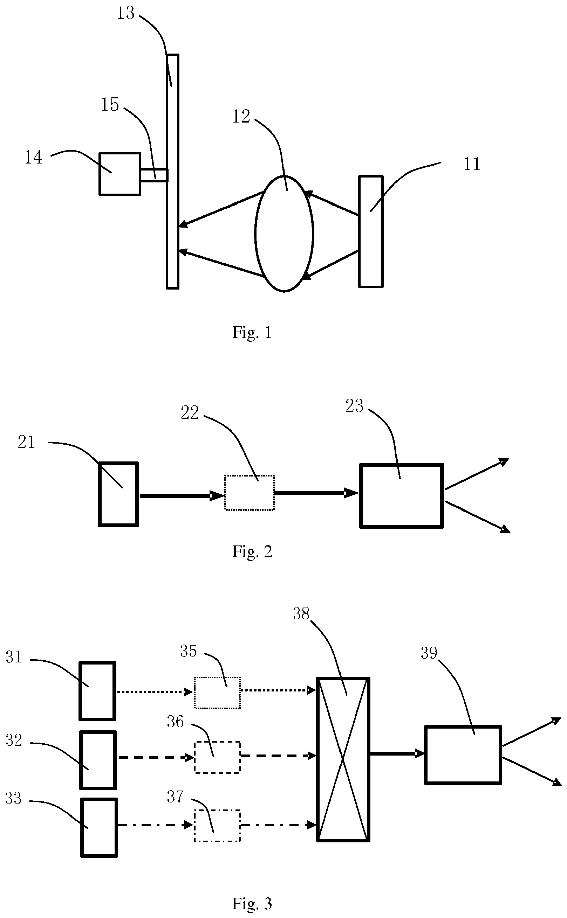

Referring to Fig. 1, Fig. 1 is a schematic view of a light source system of a present projector. As shown in Fig. 1, the light source system includes a solid state light source 11, a focusing system 12, a fluorescent device 13 and a driving device 14. The solid state light source 11 generates an excitation light which is incident onto the fluorescent device 13 after focused by the focusing system 12. The fluorescent device 13 includes multiple color segments (not shown in Fig. 1), wherein at least some of the segments are coated with fluorescent materials. The fluorescent device 13 is driven by the driving device 14 to rotate around axis 15, so that the excitation light excites different segments in turn to generate a color light sequence formed by monochromatic light pulses of different colors, such as red light pulse, green light pulse, blue light pulse, red light pulse...over and over again.

Referring to Fig. 2, Fig. 2 is a schematic view of a single-chip projection system using the light source system of Fig. 1. As shown in Fig. 2, the projection system includes a light source system 21, a light modulation device 22 and a projection device 23. The light source system 21 generates a multi-color light sequence by the method described in Fig. 1. The multi-color light sequence is incident onto the light modulation device 22 and image-modulated by it. Then the modulated multi-color light sequence is incident to the projection device 23 and projected by it. In this projection system, the light modulation device 22 only can modulate a certain monochromatic color light pulse in the multi-color light sequence at one moment, namely monochromatic color lights of different colors share the light modulation device 22 by time division multiplexing, so that the display brightness is relatively low. Meanwhile, the rapid change of the monochromatic images with different colors results in color breakup effect.

Referring to Fig. 3, Fig. 3 is a schematic view of a conventional three-chip projection system. As shown in Fig. 3, to solve the technical problem of the single-chip projection system shown in Fig. 2, in the three-chips projection system shown in Fig. 3, the light sources 31, 32, 33 respectively generate red light, green light, blue light, and the three light modulation units 35, 36 and 37 respectively modulate primary lights of corresponding colors. The red light, green light and blue light modulated by the modulation units 35, 36 and 37 respectively are combined by a light combination device 38 and further projected by a projection device 39. However, in the three-chip projection system three light sources 31, 32 and 33 are respectively used to provide three primary color lights, so that the cost is obviously higher than that of the single-chip projection system.

Moreover, in the display industry, color saturation is an important parameter to evaluate display performance. However relative narrow spectral ranges of the primary lights are required for high color saturation. For example, color coordinates (0.33, 0.63) and (0.65, 0.34) are usually used as color standard of green light and red light respectively, and in common display the x coordinate value of green light is required to be not larger than 0.33, and the y coordinate value to be not smaller than 0.63, and the x coordinate value of red light is required to be not smaller than 0.65, the y coordinate value to be not larger than 0.34. In the three-chips projection system mentioned above, a part of primary color lights are obtained by fluorescent excitation. The spectral range of the primary light generated from fluorescent excitation is relatively wide, and it is needed to be filtered by color filters to get relative narrow spectrum and better color coordinates.

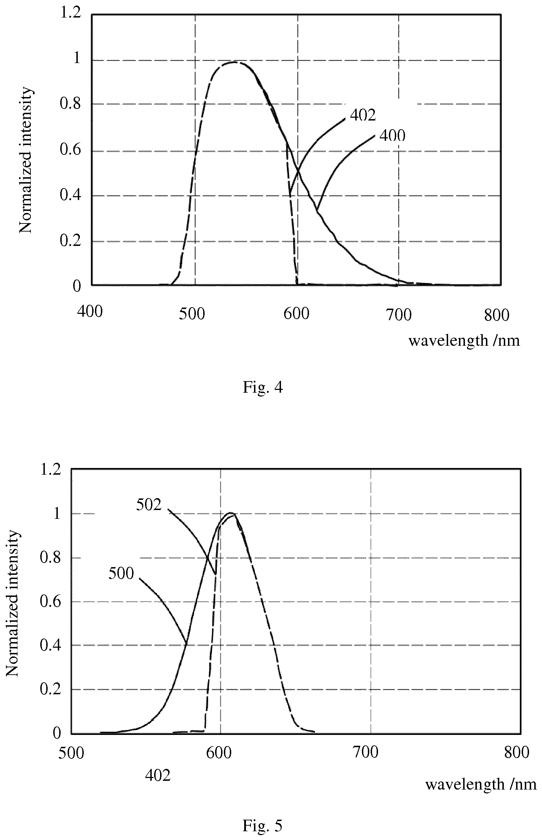

Referring to Fig. 4, Fig. 4 illustrates the spectrum of the green fluorescent light used in the projection system shown in Fig. 3 . The curve 400 shows the original spectral curve of the green fluorescent light whose color coordinates are (0.384, 0.577), where the x coordinate value and y coordinate value are both far away from the color standard of green light. The curve 402 shows the filtering modified spectral curve of the green fluorescent light whose color coordinates are (0.323, 0.63), where the x coordinate value and y coordinate value both meet the color standard of green light.

As shown in Fig. 5, Fig. 5 illustrates the spectrum of the red fluorescent light used in the projection system shown in Fig. 3. The curved 500 shows the original spectral curve of the red fluorescent light whose color coordinates are (0.608, 0.391), where the x coordinate value and y coordinate value are both far away from the color standard of red light. The curve 502 shows the filtering modified spectral curve of the red fluorescent light whose color coordinate is (0.66, 0.34), where the x coordinate value and y coordinate value both meet the color standard of red light.

International patent application number WO 2011/092841 describes an illumination optical system for emitting three kinds of light in a same direction.

However after the filtering modification mentioned above the brightness of green light loses 12% and the brightness of red light loses 45%. Therefore, the present three-chip projection systems widely suffer from the technical problems of high cost and low efficiency.

In sum, a projection system is needed to solve the technical problems of high cost and low efficiency in the conventional three-chip projection system.

### Summary of the Invention

The technical problem solved by the present invention is to provide a projection system and a light emitting device thereof to reduce cost and increase efficiency.

To solve the problems mentioned above, a technical scheme of the present invention is: to provide a light emitting device and projection system in accordance with the appended claims
Wherein, the wide-spectrum light is white light or yellow light.

Wherein the excitation light is ultra-violet or near ultra-violet excitation light, and the wavelength conversion layer comprises at least two materials among red fluorescent material, green fluorescent material, yellow fluorescent material and blue fluorescent material.

Wherein the excitation light is ultra-violet or near ultra-violet excitation light, and the wavelength conversion layer comprises yellow fluorescent material or green fluorescent material.

Wherein the excitation light is blue excitation light, and the wavelength conversion layer comprises red fluorescent material and green fluorescent material.

Wherein the converted light comprises red converted light and green converted light, and the red converted light and the green converted light are mixed with a part of the blue excitation light which is not absorbed by the wavelength conversion layer to form the wide-spectrum light.

Wherein the converted light comprises red converted light and green converted light which are mixed to form the wide-spectrum light.

Wherein the excitation light is blue excitation light, and the wavelength conversion layer comprises yellow fluorescent material.

Wherein the converted light comprises yellow converted light which is the wide-spectrum light.

Wherein the converted light comprises yellow converted light which is mixed with a part of the blue excitation light not absorbed by the wavelength conversion layer to form the wide-spectrum light.

Wherein the wavelength conversion device also comprises a base board, and the wavelength conversion layer comprises at least two wavelength conversion materials which are formed as respective layers and arranged in a stack on the base board.

Wherein the wavelength conversion layer comprises a first wavelength conversion material emitting a first converted light and a second wavelength conversion material emitting a second converted light, wherein the peak wavelength of the first converted light is longer than that of the second converted light; the first wavelength conversion layer and the second wavelength conversion layer are arranged in a stack on the base board.

Wherein at least two kinds of monochromatic light comprise at least two kinds of light among red light, green light and blue light.

Wherein one monochromatic light of the at least two kinds of monochromatic light is a part of the excitation light which is not absorbed by the wavelength conversion layer.

Wherein the wavelength conversion layer enables the excitation light to excite the wavelength conversion layer along a pre-defined path, and the wavelength conversion material of the wavelength conversion layer is uniform along the pre-defined path.

Wherein the intensity and the spectrum of the converted light generated from the wavelength conversion layer are uniform along the pre-defined path.

Wherein the excitation light emitted from the excitation light source is stable in time.

Wherein the driving device drives the wavelength conversion device to periodically rotate around a rotation axis, so that the excitation light periodically excites the wavelength conversion layer along a circular-shaped path which is concentric with the rotation axis.

Wherein the driving device drives the wavelength conversion device to oscillate linearly, so that the excitation light excites the wavelength conversion layer repeatedly along a linear path.

Wherein the wavelength conversion device also comprises a base board, and the wavelength conversion layer is located on the base board with an air gap between them.

Wherein the wavelength conversion device also comprises a dichroic filter layer which is located on the surface of the wavelength conversion layer onto which the excitation light is incident, and the dichroic filter layer transmits the excitation light and reflects the converted light.

Wherein the wavelength conversion device also comprises a reflecting layer which is located on the surface of the wavelength conversion layer opposite the excitation light, and the light emitting device also comprises a reflecting cup and a light collection device, wherein the reflecting surface of the reflecting cup faces the reflecting layer, and the reflecting layer reflects the wide-spectrum light to the reflecting cup which then focuses the wide-spectrum light to the entrance of the light collection device, and the light collection device guides the wide-spectrum light to the light splitting device.

Wherein the reflecting cup comprises an opening through which the excitation light is incident onto the wavelength conversion layer.

Wherein the reflecting cup is semi-sphere shaped, and the position of the wavelength conversion layer on which the excitation light is incident and the entrance position of the light collection device are symmetrical with respect to the center of the semi-sphere.

Wherein the reflecting cup is semi-ellipsoid shaped, and the position of the wavelength conversion layer on which the excitation light is incident and the entrance position of the light collection device are the two focus points of the semi-ellipsoid respectively.

Wherein the light splitting device is at least one piece of dichroic filter which transmits a part of the spectral range of the wide-spectrum light and reflects another part of the spectral range of the wide-spectrum light.

Wherein the light emitting device also comprises an auxiliary light source which generates a monochromatic light.

Wherein the light emitting device also comprises a dichroic mirror which transmits one of the wide-spectrum light and the monochromatic light generated by the auxiliary light source and reflects the other one, and directs the transmitted light and reflected light to the light splitting device.

Wherein the monochromatic light generated by the auxiliary light source is a red light or a blue light.

To solve the technical problem mentioned above, another technical scheme of the present invention is: to provide a projection system, comprising any one of the above mentioned light emitting device, wherein the monochromatic light is a primary color light, and also comprising: at least two light modulation devices for respectively modulating the corresponding primary color lights emitted from the light splitting device; a light combination device for combining the at least two primary color lights which have been modulated by the light modulation devices.

The advantages of the present invention include: different from the conventional arts, the projection system and the light emitting device thereof of the present invention can employ only one light source to generate at least two primary lights of different colors, so the light source number and the cost are both decreased. Moreover, a wide-spectrum light is split by wavelength splitting to generate at least two primary lights of different colors, so that the power loss in the conventional art caused by discarding some spectral range of the fluorescent light as being useless light is prevented and the efficiency is increased.

### Brief Description of the Drawings

Fig. 1 is a schematic view of a light source system of a conventional projector;
Fig. 2 is a schematic view of a single-chip projection system using the light source system of Fig. 1;
Fig. 3 is a schematic view of a conventional three-chips projection system;
Fig. 4 illustrates the spectrum of the green fluorescent light used in the projection system shown in Fig. 3;
Fig. 5 illustrates the spectrum of the red fluorescent light used in the projection system shown in Fig. 3;
Fig. 6 is a schematic view of an embodiment of the projection system of the present invention;
Fig. 7 is a schematic view of an embodiment of wide-spectrum light source in the projection system of the present invention;
Fig. 8 is the front view of the fluorescent device of the wide-spectrum light source shown in Fig. 7;
Fig. 9 illustrates the spectrum of the wide-spectrum light generated by the wide-spectrum light source shown in Fig. 7;
Fig. 10A is a schematic view of an embodiment of a light splitting device in the projection system of the present invention;
Fig. 10B is a schematic view of another embodiment of a light splitting device in the projection system of the present invention;
Fig. 11 illustrates the transmittance curve of the dichroic filter in the light splitting device shown in Fig. 10A or 10B;
Fig. 12 illustrates the spectrum of the wide-spectrum light shown in Fig. 9 after the light splitting device shown in Fig. 10;
Fig. 13 is a schematic view of another embodiment of wide-spectrum light source in the projection system of the present invention;
Fig. 14 is the front view of the fluorescent device of the wide-spectrum light source shown in Fig. 13;
Fig. 15A is a schematic view of an alternative embodiment of the wide-spectrum light source in the projection system of the present invention;
Fig. 15B is a schematic view of an alternative embodiment of the wide-spectrum light source in the projection system of the present invention;
Fig. 16 is a schematic view of an alternative embodiment of the wide-spectrum light source in the projection system of the present invention;
Fig. 17 is a schematic view of an alternative embodiment of the wide-spectrum light source in the projection system of the present invention;
Fig. 18 is a schematic view of an alternative embodiment of the wide-spectrum light source in the projection system of the present invention;
Fig. 19 is a schematic view of an alternative embodiment of the wide-spectrum light source in the projection system of the present invention;
Fig. 20 is a schematic view of an alternative embodiment of the wide-spectrum light source in the projection system of the present invention;

### Detailed Description of the Preferred Embodiments

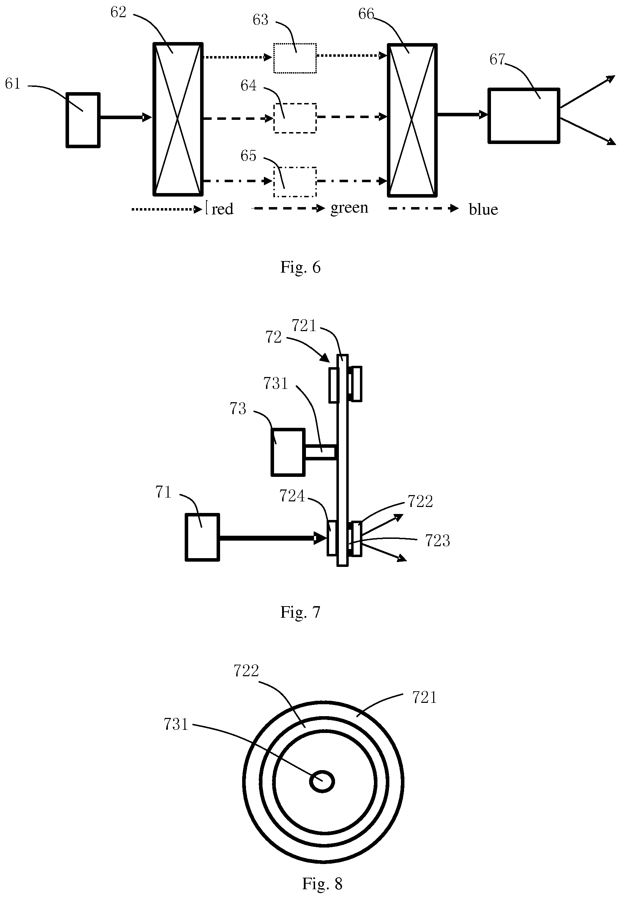

Referring to Fig. 6, Fig. 6 is a schematic view of an embodiment of the projection system of the present invention. As shown in Fig. 6, the projection system in the present embodiment mainly includes a wide-spectrum light source 61, a light splitting device 62, light modulation devices 63, 64,65, a light combination device 66 and a projection device 67.

The wide-spectrum light source 61 generates a wide-spectrum light which is split by the light splitting device 62 to output at least two monochromatic lights of different colors along different paths. In the present embodiment, the monochromatic lights can be primary lights, of course in other embodiments the monochromatic light also can be monochromatic light of other wavelength, even light having certain spectral width.

In the present embodiment, the wide-spectrum light is white light, and the light splitting device 62 splits the white light into red light, green light and blue light which are three primary lights of different colors. Of course a person skilled in the relevant field knows that by making use of the light splitting device 62 the wide-spectrum light generated by the wide-spectrum light source 61 can be split into at least two primary lights of other different colors, and the present invention is not limited to particular colors.

The red light is further incident onto the light modulation device 63 and image-modulated by it, and the green light is incident onto the light modulation device 64 and image-modulated by it, and the blue light is incident onto the light modulation device 65 and image-modulated by it. The red light, green light and blue light modulated by the light modulation devices 63, 64 and 65 are further incident on the light combination device 66 and combined by it, and then projected by the projection device 67.

In the present embodiment, only one light source is employed to generate at least two primary lights of different colors, so the light source number and the cost are both decreased. Moreover, splitting a wide-spectrum light by light splitting to generate at least two primary lights of different colors can prevent the power loss in the conventional art caused by the filtering of some spectral range of the fluorescent light as useless light, and the efficiency is increased.

Embodiments of devices in the projection system of the present invention are described in detail below with reference to the Figures.

Referring to Fig. 7-8, Fig. 7 is a schematic view of an embodiment of wide-spectrum light source in the projection system of the present invention, and Fig. 8 is the front view of the fluorescent device of the wide-spectrum light source shown in Fig. 7. As shown in Fig. 7, the wide-spectrum light source includes an excitation light source 71, a wavelength conversion device 72 and a driving device 73. The excitation light source 71 generates an excitation light. The wavelength conversion device 72 includes a base board 721 and a wavelength conversion layer 722 located on the base board 721. The driving device 73 drives the fluorescent device 72 and enables the excitation light to excite the wavelength conversion layer 722 along a pre-defined path. In the present embodiment, the driving device 73 is a rotating motor with a rotation axis 731 which drives the wavelength conversion device 72 to periodically rotate around the rotation axis 731, so that the excitation light periodically excites the wavelength conversion layer 722 along a round-shaped path which is concentric with the rotation axis 731. The wavelength conversion device 72 also includes a dichroic filter layer 724 which is located on the surface of the wavelength conversion layer 722 onto which the excitation light is incident, and the dichroic filter layer is used to transmit the excitation light generated by the excitation light source 71 and reflect the converted light generated from the wavelength conversion layer 722 to increase the output efficiency of the converted light of the wavelength conversion device 72. Preferably, the dichroic filter layer 724 is in contact with to the wavelength conversion layer 722. Moreover, an air gap 723 is preferably set between the base board 721 and the wavelength conversion layer 722 to improve the conversion efficiency of the wavelength conversion layer 722. As shown in Fig. 8, in the present embodiment, the wavelength conversion layer is ring-shaped which is rotational symmetric with respect to the rotation axis 731 in order to reduce the amount of the wavelength conversion layer 722. In a preferred embodiment, the wavelength conversion material in the wavelength conversion layer 722 is distributed uniformly in the whole ring-shaped structure.

The wavelength conversion material is used to absorb an incident light of a certain wavelength and be excited to emit an output light with a wavelength different from the incident light. Wavelength conversion materials have many categories, including phosphor powder, fluorescent dye, quantum dots etc, and the phosphor powder is the most commonly used. Taking phosphor powder as an example, in this case the wavelength conversion layer 722 is referred to as fluorescent layer 722. There are many methods to form the fluorescent layer 722, one of them is to mix the phosphor powder and an adhesive material and to form a layer-shaped structure by printing or extrusion forming. The adhesive material can be organic adhesive material such as silicone or epoxy, and also can be inorganic adhesive material such as nano-structured alumina particles.

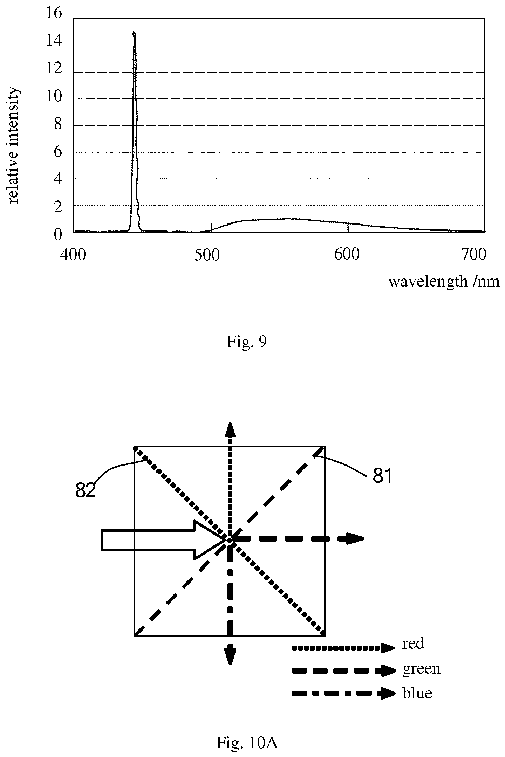

In the present embodiment, the fluorescent layer 722 includes at least one kind of fluorescent material, and the fluorescent material of the fluorescent layer is uniform along the excitation path of the excitation light (pre-defined path). Here being uniform means the parameters such as formulation, ingredient amounts and thickness etc. are uniform, so that the fluorescent layer 722 can continuously generate the same fluorescent light under the excitation light. For example, when the excitation light is blue excitation light, the fluorescent layer 722 can be the mixture of a red fluorescent material and a green fluorescent material, or a yellow fluorescent material. In this case, the red fluorescent material converts the blue excitation light to red fluorescent light and the green fluorescent material converts the blue excitation light to green fluorescent light. And the remaining blue excitation light not converted by the fluorescent layer 722 and the red fluorescent light and green fluorescent light together form a wide-spectrum light as shown in Fig. 9, with color coordinates (0.311, 0.328) which is in the white light region.

When the excitation light is blue excitation light, the fluorescent layer 722 also can be a yellow fluorescent material which converts the blue excitation light to yellow fluorescent light, and the remaining blue excitation light not converted by the fluorescent layer 722 and the yellow fluorescent light form a wide-spectrum light as shown in Fig. 9. Moreover, the excitation light can also be ultra-violet or near ultra-violet excitation light. In this case, the fluorescent layer 722 can include a red fluorescent material, a green fluorescent material and a blue fluorescent material.

In the present embodiment, the red fluorescent material converts ultra-violet or near ultra-violet excitation light to red fluorescent light, the green fluorescent material converts ultra-violet or near ultra-violet excitation light to green fluorescent light, and the blue fluorescent material converts ultra-violet or near ultra-violet excitation light to blue fluorescent light. The mixture light of the red fluorescent light, green fluorescent light and blue fluorescent light can also form a wide-spectrum light.

When the wavelength conversion layer 722 as shown in Fig. 8 includes at least two wavelength conversion materials, all of the wavelength conversion materials are uniformly mixed and set on the base board 721 of the wavelength conversion device. The multiple wavelength conversion materials of the wavelength conversion layer can also be formed as respective layers and arranged in a stack in the base board 721. Because wavelength conversion materials tends to absorb light whose wavelength is shorter than the peak wavelength of its converted light, preferably, wavelength conversion materials of longer peak converted wavelength is located closer to the base board than wavelength conversion materials of shorter peak converted wavelength, in order to reduce the converted light loss caused by absorption of other wavelength conversion material. More specifically, the wavelength conversion layer can include a first wavelength conversion material and a second wavelength conversion material respectively emitting a first converted light and a second converted light respectively, where the peak wavelength of the first converted light is longer than that of the second converted light. The first wavelength conversion material is set on the base board 721 and the second wavelength conversion material is set on the first wavelength conversion material. For example, the wavelength conversion layer includes red fluorescent material and green fluorescent material. The peak wavelength of the red fluorescent material is longer than that of the green fluorescent material, so the green fluorescent material does not tend to absorb red light and the red fluorescent material tends to absorb green light. Therefore the red fluorescent material is set on the base board 721 and the green fluorescent material is set on the red fluorescent material, so that most of the red light is not absorbed by the green fluorescent material and the light loss is reduced.

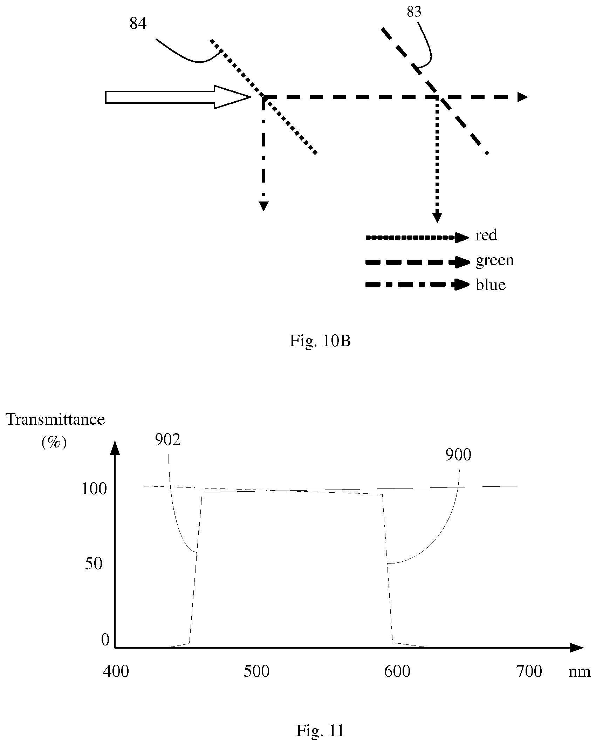

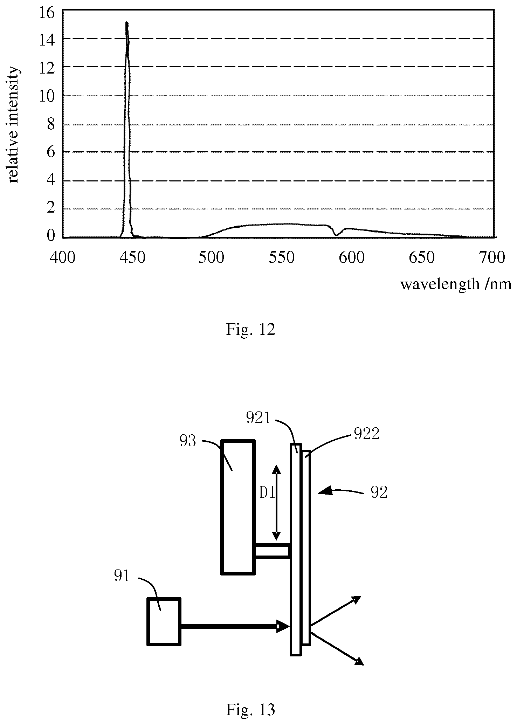

Of course a person skilled in the relevant art knows that the excitation light of other colors can be used as the excitation light of the present embodiment, as long as the required wide-spectrum light can be formed by the fluorescent light generated by the fluorescent layer 722 or by the mixing of the fluorescent light and the remained excitation light not converted by the fluorescent layer 722. And the number of fluorescent materials also can include only two kinds. In the present invention, wide-spectrum light refer to a light whose spectrum covers at least two of three primary colors, such as at least two of the red, blue, green colors, i.e., a light that can be split by wavelength splitting into at least two color lights of the red, blue, green colors. Referring to Fig. 10-11, Fig. 10A and 10B are schematic views of two preferred embodiments of light splitting devices in the projection system of the present invention, and Fig. 11 illustrates the transmittance curve of the dichroic filter in the light splitting device shown in Fig. 10A or 10B. As shown in Fig. 10A, a preferred embodiment of the light splitting device in the projection system of the present invention includes a first dichroic filter 81 and a second dichroic filter 82. The first dichroic filter 81 and the second dichroic filter 82 are set perpendicularly to each other, and the wide-spectrum light is incident onto the first dichroic filter 81 and the second dichroic filter 82 with incident angles of 45 degrees. As shown Fig. 11, the first dichroic filter 81 is a low-pass filter whose transmittance curve is shown as curve 900, and it reflects red light and transmits green light and blue light. The second dichroic filter 82 is a high-pass filter whose transmittance curve is shown as curve 902, and it reflects blue light and transmits red light and green light. Therefore, after the first dichroic filter 81 and the second dichroic filter 82 the wide-spectrum light is split into red light, green light and blue light whose spectra are shown in Fig. 12. It can been seen by comparing Fig. 9 and Fig. 12, the loss of the total output light power of the light splitting device relative to the power of the wide-spectrum light is small, only about 4%. Many types of light splitting device are well known in the art and the present invention is not limited to any specific types.

Fig. 10B is a schematic view of another embodiment of a light splitting device in the projection system of the present invention, where the transmittance curve of the second dichroic filter 84 is shown as curve 902, and the transmittance curve of the first dichroic filter 83 is shown as curve 900. With the same principle of Fig. 10A, in this structure the wide-spectrum light also can be split into red light, green light and blue light. In fact, the two dichroic filters whose transmittance curves are shown in Fig. 11 can be spatially arranged in many manners in order to split lights of different wavelength into different light paths by transmission or reflection using the wavelength-dependent transmittance curve of the dichroic filters. If the wide-spectrum light only needs to be split into two light beams of different colors, only one dichroic filter is needed.

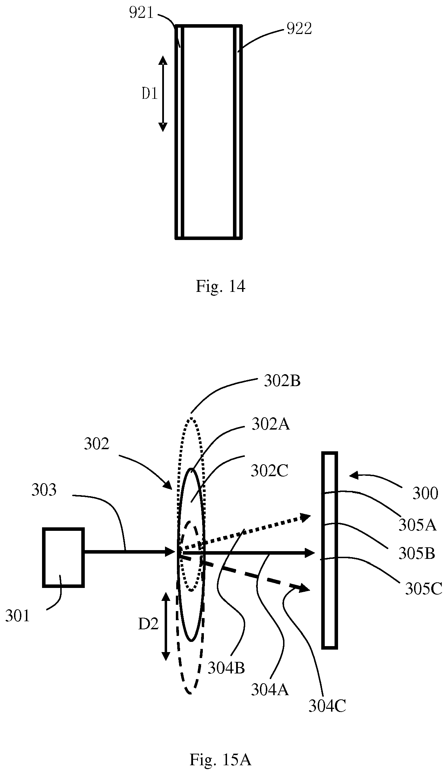

Referring to Fig. 13-14, Fig. 13 is a schematic view of another embodiment of wide-spectrum light source in the projection system of the present invention, and Fig. 14 is the front view of the fluorescent device of the wide-spectrum light source shown in Fig. 13. The wide-spectrum light source includes an excitation light source 91, a fluorescent device 92 and a driving device 93. The excitation light source 91 generates an excitation light. The fluorescent device 92 includes base board 921 and a fluorescent layer 922 located on the base board 921. In the present embodiment, the driving device 93 is a linear moving device which drives the fluorescent device 92 to oscillate linearly along the direction D1 to enable the excitation light to repeatedly excite the fluorescent layer 922 along a linear path. As shown in Fig. 14, in the present embodiment, the fluorescent layer 922 is strip-shaped with a length-wise direction parallel to the movement direction D1 of the fluorescent device 92. Preferably, there is an air gap between the base board 921 and the fluorescent layer 922 to improve the conversion efficiency of the fluorescent layer 922.

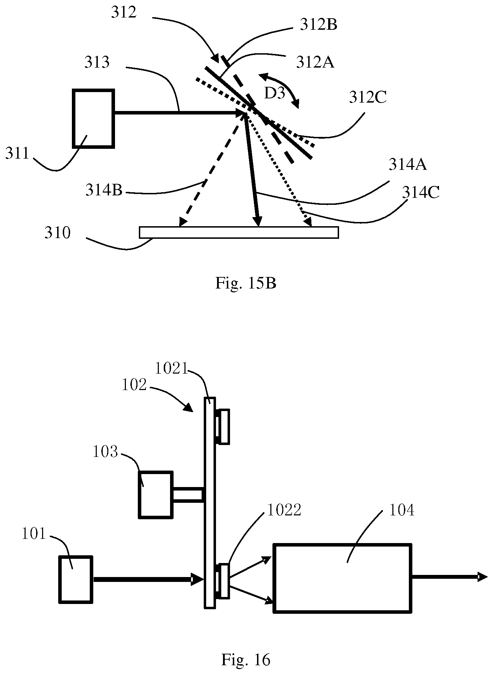

In fact, the present invention does not require the driving device to enable the excitation light to excite the wavelength conversion layer along a pre-defined path, so long as the excitation light moves relative to the wavelength conversion layer. Moreover, besides driving the wavelength conversion device, the driving device also can drive the excitation light source or the optical components between the excitation light source and the wavelength conversion device in order to enable the excitation light source to excitation the wavelength conversion layer along a pre-defined path. Fig. 15A and 15B shows two exemplarily arrangements. Referring to Fig. 15A and 15B, Fig. 15A is a schematic view of an alternative embodiment of the wide-spectrum light source in the projection system of the present invention, and Fig. 15B is a schematic view of another alternative embodiment of wide-spectrum light source in the projection system of the present invention.

In Fig. 15A, an excitation light source 301 emits an excitation light 303, which passes a convex lens 302 and is incident into a fluorescent device 300. The convex lens 302 is connected to a driving device (not shown in the Figure), and the driving device drives the convex lens 302 to oscillate linearly along direction D2. When the convex lens moves to the three positions of 302A, 302B and 302C, the excitation light 303 will respectively be refracted as three light rays 304A, 304B and 304C with different output paths which then are incident into the three positions 305A, 305B and 305C on the fluorescent device. If the convex lens continuously oscillates between 302B and 302C, the excitation path on the fluorescent device is the line segment connecting 305B and 305C.

In Fig. 15B, an excitation light source 311 emits an excitation light 313 which is incident onto the fluorescent device 310 after reflected by a reflecting mirror 312. The reflecting mirror 312 is connected to a driving device (not shown in the Figure), and the driving device drives the reflecting mirror 312 to oscillate linearly along direction D3. When the reflecting mirror rotates to the three angles 312A, 312B and 312C, the excitation light 313 will respectively be reflected as three light rays 314A, 314B and 314C with different output paths.

Similarly, the method described in Fig. 15A and 15B can be used in the preferred embodiment of the wide-spectrum light source of the present invention shown in Fig. 7: keeping the wavelength conversion device 72 in Fig. 7 stationary, and based on the principle of changing the incident angle of the excitation light in Fig. 15A or 15B, rotating the convex lens 302 or the reflecting mirror 312 around a tilted central axis, so that the excitation light periodically excites the wavelength conversion layer 72 along a round-shaped path concentric with the rotation axis 731.

Moreover, the optical elements such as wavelength conversion device can be kept stationary, and only the excitation light source is made to rotate or oscillate within an angular range, to achieve the goal of making the excitation light excite the fluorescent layer along a pre-defined path. Or, the same goal can be achieved by making any two or more elements among the excitation light, the wavelength conversion device and the optical element between them move together in a cooperative manner. Further detailed descriptions are omitted here.

Referring to Fig. 16, Fig. 16 is a schematic view of an alternative embodiment of the wide-spectrum light source in the projection system of the present invention. The wide-spectrum light source of the present embodiment includes an excitation light source 101, a fluorescent device 102 and a driving device 103. The excitation light source 101 generates an excitation light. The fluorescent device 102 includes a base board 1021 and a fluorescent layer 1022 located on the base board 1021. The wide-spectrum light source of the present embodiment further includes a light collection device 104 which collects the fluorescent light emitted from the fluorescent layer 1022 of the fluorescent device 102, or the fluorescent light and the un-converted excitation light, and guides these lights to the light splitting device (not shown in Fig. 16).

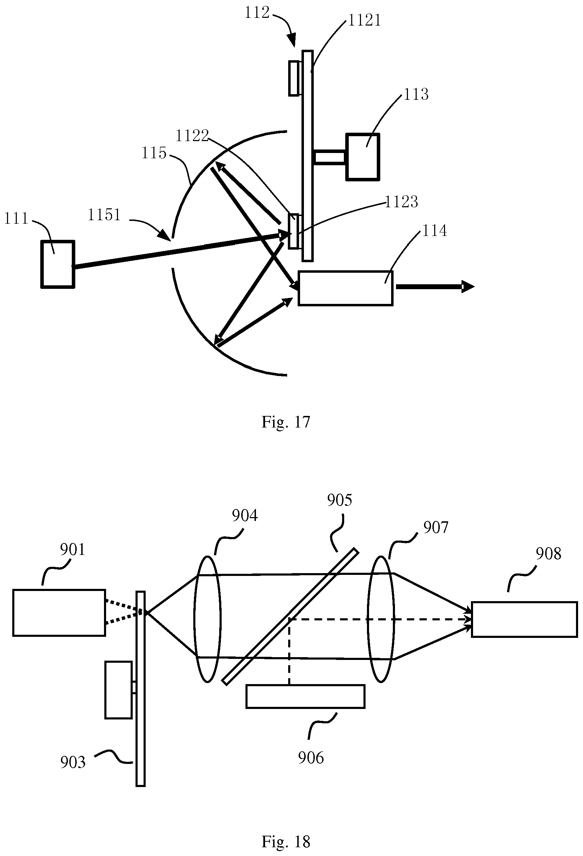

Referring to Fig. 17, Fig. 17 is a schematic view of an alternative embodiment of the wide-spectrum light source in the projection system of the present invention. The wide-spectrum of the present embodiment includes an excitation light source 111, a fluorescent device 112, a driving device 113, a light collection device 114 and a reflecting cup 115.

The excitation light source 111 generates an excitation light, which is incident onto the fluorescent layer 1122 of the fluorescent device 112 through an opening 1151 located on the top of the reflecting cup 115. The fluorescent device 112 includes a base board 1121 and the fluorescent layer 1122 located on the base board 1121, and also includes a reflecting layer 1123. The reflecting layer 1123 is located on the surface of the fluorescent layer 1122 opposite the excitation light, and in the present embodiment it is located between the fluorescent layer 1122 and the base board 1121. Of course a person skilled in the relevant art knows that the reflecting layer 1123 can also be located in other positions after the fluorescent layer 1122 in the excitation light path. The reflecting layer 1123 reflects the fluorescent light emitted from the fluorescent layer 1122 or reflects the fluorescent light and the excitation light not converted by the fluorescent layer 1122. The reflecting cup 115 is semi-ellipsoid shaped or semi-sphere shaped and the reflecting surface faces inward. The reflecting cup 115 focuses the fluorescent light or the fluorescent light and the excitation light not converted by the fluorescent layer 1122 into the entrance of the light collection device 114, which in turn guides the lights into the light splitting device (not shown in the Figure).

When the reflecting cup 115 is semi-sphere shaped, the position of the fluorescent device 112 on which the excitation light is incident and the entrance position of the light collection device 114 are symmetric with respect to the center of the semi-sphere. When the reflecting cup is semi-ellipsoid shaped, the position of the fluorescent device 112 on which the excitation light is incident and the entrance position of the light collection device 114 are the two focus points of the semi-ellipsoid respectively.

In the present embodiment, a reflecting layer 1123 is attached or electrolytic deposited on the surface of the base board 1121, and a wavelength conversion material is mixed with an adhesive material to form a mixture which is directly coated on the surface of the reflecting layer to form a fluorescent layer.

Referring to Fig. 18, Fig. 18 is a schematic view of an alternative embodiment of the wide-spectrum light source in the projection system of the present invention. As shown in Fig. 18, the wide-spectrum light source of the present embodiment includes an excitation light source 901, a fluorescent device 903, a collection lens 904, a dichroic mirror 905, a first light source 906, a focusing lens 907 and a light homogenization device 908. The excitation light source 901 generates ultra-violet or near ultra-violet excitation light, the fluorescent layer of the fluorescent device 903 includes red fluorescent material and green fluorescent material, and the first light source emits blue light. The red fluorescent material converts the ultra-violet or near ultra-violet excitation light to red fluorescent light, and the green fluorescent material converts the ultra-violet or near ultra-violet excitation light to green fluorescent light. The red fluorescent light is mixed with the green fluorescent light to form a wide-spectrum light, which is collected by the collection lens 904 and directed onto the dichroic mirror 905 from a first side of the dichroic mirror. The blue light emitted by the first light source is directed onto the dichroic mirror 905 from a second side of the dichroic mirror 905. The dichroic mirror 905 transmits the wide-spectrum light and reflects the blue light emitted from the first light source 906 in order to combine the wide-spectrum light and the blue light into a light beam. The combined wide-spectrum light and blue light are focused by the focusing lens 907 to the light homogenization device 908 to be homogenized, and the homogenized light is then directed onto a light splitting device (not shown in the Figure) which splits the homogenized light into at least two primary color lights with different propagation paths.

In the present embodiment the first light source is directly used to provide blue light. It can be understood that, the fluorescent layer in the present embodiment can also include blue fluorescent material, and when the blue fluorescent light generated from the blue fluorescent material excited by the ultra-violet or near ultra-violet excitation light is insufficient, the first light source 906 can be used to emit supplementary blue light. The excitation light source 901 in the present embodiment also can emit blue excitation light; the red fluorescent material converts the blue excitation light to red fluorescent light, the green fluorescent material converts the blue excitation light to green fluorescent light, and the red fluorescent light, the green fluorescent light and the blue excitation light not converted by the wavelength conversion layer are mixed to form a wide-spectrum light. When the blue excitation light in the wide-spectrum light is insufficient, the first light source 906 can be used to emit supplementary blue light.

In the present embodiment the first light source 906 is used to directly provide or to supplement the blue component of the wide-spectrum light. It can be understood that, other primary color lights can also be provided in the direct or supplementary manner by a light source. For example, the fluorescent layer in the present embodiment can include green fluorescent material and blue fluorescent material, the green fluorescent material and blue fluorescent material respectively convert the ultra-violet or near ultra-violet excitation light to green fluorescent light and blue fluorescent light; in this case a second light source which emits red light can be used to provide red light which is combined with the green fluorescent light and the blue fluorescent light to form one beam through a dichroic mirror.

In the present embodiment, the light emitted by the auxiliary light source (such as the first light source 906) is combined with the wide-spectrum light from the wavelength conversion layer through the dichroic mirror 905, and the combined light is split into at least two primary light by the light splitting device. It can be understood that, the dichroic mirror 905 can be omitted; in this case the wide-spectrum light emitted from the wavelength conversion layer is directly split into at least two primary lights by the light splitting device, and the at least two primary lights and the light emitted from the auxiliary light source are respectively directed into three light modulation units.

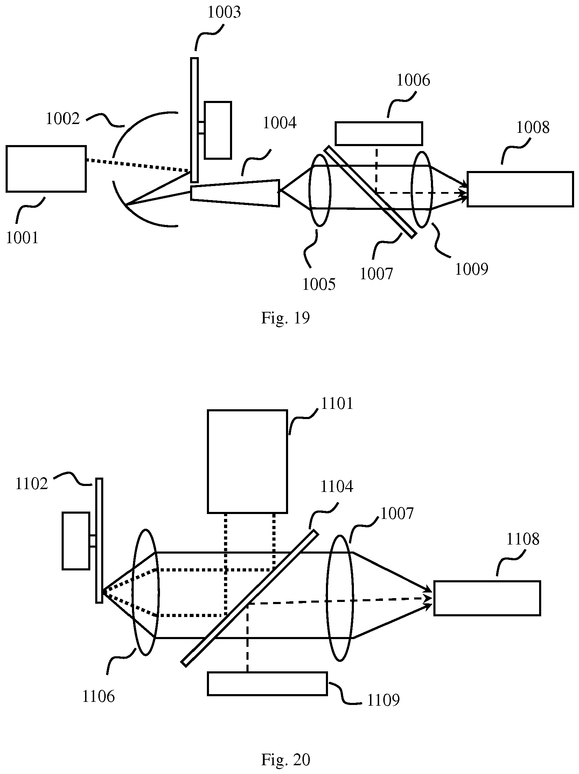

Referring to Fig. 19, Fig. 19 is a schematic view of an alternative embodiment of the wide-spectrum light source in the projection system of the present invention. As shown in Fig. 19, the wide-spectrum light source of the present embodiment includes:
A excitation light source 1001, a fluorescent device 1003, a light collection device 1004, a reflecting cup 1002, a collection lens 1005, a dichroic mirror 1007, a first light source 1006, a focusing lens 1009 and a light homogenization device 1008.

The excitation light source 1001 generates ultra-violet or near ultra-violet excitation light, which is incident onto the fluorescent layer 1122 of the fluorescent device 1003 through an opening 1151 located on the top of the reflecting cup 1002. The fluorescent device 1003 has the same structure as the wavelength conversion device in the embodiment shown in Fig. 17; besides base board (not shown in the Figure) and fluorescent layer located on the base board (not shown in the Figure), is also includes a reflecting layer (not shown in the Figure). The fluorescent layer of the fluorescent device 1003 includes a red fluorescent material and a green fluorescent material. The red fluorescent material converts the ultra-violet or near ultra-violet excitation light to red fluorescent light, and the green fluorescent material converts the ultra-violet or near ultra-violet excitation light to green fluorescent light. The red fluorescent light is mixed with the green fluorescent light to form a wide-spectrum light. The reflecting layer is located on the surface of the fluorescent layer opposite the excitation light and reflects the wide-spectrum light. The reflecting cup 1002 is semi-ellipsoid shaped or semi-sphere shaped and the reflecting surface faces inward. The reflecting cup 1002 focuses the wide-spectrum light reflected by the reflecting layer into the entrance of the light collection device 1004 which guides the light into the collection lens 1005.

The wide-spectrum is collected by the collection lens 1005 and directed onto the dichroic mirror 1007 from a first side of the dichroic mirror, and the blue light emitted by the first light source 1006 is directed onto the dichroic mirror 1007 from a second side of the dichroic mirror 1007. The dichroic mirror 1007 transmits the wide-spectrum light and reflects the blue light emitted from the first light source 1006 thereby combining the wide-spectrum light and the blue light to form one beam. The combined wide-spectrum light and blue light are focused by the focusing lens 1009 to the light homogenization device 1008 to be homogenized.

In the present embodiment the first light source 1006 is directly used to provide blue light. It can be understood that, the fluorescent layer in the present embodiment can also include a blue fluorescent material, and when the blue fluorescent light generated from the blue fluorescent material excited by the ultra-violet or near ultra-violet excitation light is insufficient, the first light source 1006 can be used to emit supplementary blue light. The excitation light source 1001 in the present embodiment also can emit blue excitation light; the red fluorescent material converts the blue excitation light to red fluorescent light, the green fluorescent material converts the blue excitation light to green fluorescent light, and the red fluorescent light, the green fluorescent light and the blue excitation light not converted by the wavelength conversion layer are mixed to form a wide-spectrum light. When the blue excitation light in the wide-spectrum light is insufficient, the first light source 1006 can be used to emit supplementary blue light.

In the present embodiment the first light source 1006 is used to directly provide or to supplement the blue component of the wide-spectrum light. It can be understood that, other primary color lights can also be provided in the direct or supplementary manner by a light source. For example, the fluorescent layer in the present embodiment can include green fluorescent material and blue fluorescent material, the green fluorescent material and blue fluorescent material respectively convert the ultra-violet or near ultra-violet excitation light to green fluorescent light and blue fluorescent light; in this case a second light source which emits red light can be used to provide red light which is combined with the green fluorescent light and the blue fluorescent light to form one beam through a dichroic mirror.

Referring to Fig. 20, Fig. 20 is a schematic view of an alternative embodiment of the wide-spectrum light source in the projection system of the present invention. As shown in Fig. 20, the wide-spectrum light source of the present embodiment includes:
An excitation light source 1101, a fluorescent device 1102, a collection lens 1106, a dichroic mirror 1104, a first light source 1109, a focusing lens 1107 and a light homogenization device 1108. The excitation light source 1101 generates ultra-violet or near ultra-violet excitation light, and the fluorescent layer of the fluorescent device 1102 includes red fluorescent material and green fluorescent material, and also includes a reflecting layer (not shown in the Figure) which is located on the surface of the fluorescent layer opposite the ultra-violet or near ultra-violet excitation light. The first light source 1109 emits blue light.

The ultra-violet or near ultra-violet light emitted from the excitation light source 1101 is directed onto the dichroic mirror 1104 from a first side of the dichroic mirror, and reflected by it to be collected by the collection lens 1106 and incident onto the fluorescent layer. The red fluorescent material of the fluorescent layer converts the ultra-violet or near ultra-violet excitation light to red fluorescent light, and the green fluorescent material converts the ultra-violet or near ultra-violet excitation light to green fluorescent light. The red fluorescent light is mixed with the green fluorescent light to form a wide-spectrum light which is reflected by the reflecting layer back to the first side of the dichroic mirror 1104. The blue light emitted by the first light source 1109 is directed onto the dichroic mirror 1104 from a second side of the dichroic mirror 1004, and the dichroic mirror 1104 transmits the wide-spectrum light and reflects the blue light emitted from the first light source 1109 thereby combining the wide-spectrum light and the blue light to form one beam. The combined wide-spectrum light and blue light are focused by the focusing lens 1107 to the light homogenization device 1108 to be homogenized.

In the present embodiment the first light source 1109 is directly used to provide blue light. It can be understood that, the fluorescent layer in the present embodiment can also include a blue fluorescent material, and when the blue fluorescent light generated from the blue fluorescent material excited by the ultra-violet or near ultra-violet excitation light is insufficient, the first light source 1109 can be used to emit supplementary blue light. The excitation light source 1101 in the present embodiment also can emit blue excitation light; the red fluorescent material converts the blue excitation light to red fluorescent light, the green fluorescent material converts the blue excitation light to green fluorescent light, and the red fluorescent light, the green fluorescent light and the blue excitation light not converted by the wavelength conversion layer are mixed to form a wide-spectrum light. When the blue excitation light in the wide-spectrum light is insufficient, the first light source 1109 can be used to emit supplementary blue light.

In the present embodiment the first light source 1109 is used to directly provide or to supplement the blue component of the wide-spectrum light. It can be understood that, other primary color lights can also be provided in the direct or supplementary manner by a light source. For example, the fluorescent layer in the present embodiment can include green fluorescent material and blue fluorescent material, the green fluorescent material and blue fluorescent material respectively convert the ultra-violet or near ultra-violet excitation light to green fluorescent light and blue fluorescent light; in this case a second light source which emits red light can be used to provide red light which is combined with the green fluorescent light and the blue fluorescent light to form one beam through a dichroic mirror.

In the present embodiment, the first light source 1109 is used as an auxiliary light source. In other embodiments, the light emitted from the auxiliary light source also can be directed to the light modulation unit with the primary lights coming from the light splitting device. Of course, in other embodiments, the dichroic mirror and other lenses can be omitted; in this case the auxiliary light source directly provide one of the primary lights coming from the light splitting device.

From the description above it can be understood that in conventional technology, multiple color phosphors are coated on a rotating base board to achieve the color light sequence of multiple monochromatic lights; this means the multiple color lights is divided in time domain. In this case to get good monochromatic color some light power has to be lost and cannot be used. In embodiments of the present invention, the monochromatic lights are not divided in time domain, namely they can be emit simultaneously in at least one time interval; thus, to each monochromatic light, the light power not used for reason of achieving good color purity can be used as a part of another simultaneously emitted color light. As a result, the light efficiency is higher than that achieved by a monochromatic light sequence.

In the present invention, the relative brightness of the monochromatic lights is determined by the spectrum of the wide-spectrum light. Therefore to ensure a constant color output, the spectra shape and intensity of the wide-spectrum light should be stable in time. Therefore, in the preferred embodiments of the present invention, the wavelength conversion layer of the wavelength conversion device which is used to generate the wide-spectrum light is uniform in material characteristics and physical characteristics along the excitation path. Furthermore, the excitation light generated by the excitation light source is also constant in time. For example, the intensity and the spectrum of the converted light generated from the wavelength conversion layer should be uniform along the pre-defined path. Of course in other embodiments strict requirements may be not needed.

The projection system in the present invention employs only one light source to generate at least two primary lights of different colors, so the light source number and the cost are both decreased. Moreover, a wide-spectrum light is split by wavelength splitting to generate at least two primary lights of different colors, so that the power loss in the conventional art caused by discarding some spectral range of the fluorescent light as being useless light is prevented and the efficiency is increased.

## Claims

1. A light emitting device, comprising:
an excitation light source (901) for generating an excitation light;
a wavelength conversion device (72) comprising a wavelength conversion layer (722) which converts at least a part of the excitation light to a converted light, wherein either the converted light is a wide-spectrum light or the converted light is mixed with a part of the excitation light which is not converted by the wavelength conversion layer to form a wide-spectrum light;
an auxiliary light source (906) which generates a monochromatic light;
a dichroic mirror (905) having a first side and a second side, wherein the dichroic mirror receives one of the wide-spectrum light and the monochromatic light generated by the auxiliary light source on the first side and transmits it, and receives the other one on the second side and reflects it, wherein the wide-spectrum light and the monochromatic light are combined into a combined light;
a light splitting device (62) for splitting the combined light into at least two monochromatic lights propagating along different paths;
wherein the wavelength conversion device further comprises a base board (721), and the wavelength conversion layer is located on the base board with an air gap (723) between them.

2. The light emitting device of claim 1, wherein the wide-spectrum light is a white light or a yellow light; and/or wherein the excitation light is an ultra-violet or near ultra-violet excitation light, and the wavelength conversion layer comprises at least two materials selected from a group consisting of a red fluorescent material, a green fluorescent material, a yellow fluorescent material and a blue fluorescent material; and/or wherein the excitation light is an ultra-violet or near ultra-violet excitation light, and the wavelength conversion layer comprises a yellow fluorescent material or a green fluorescent material; and/or wherein the excitation light is a blue excitation light, and the wavelength conversion layer comprises a red fluorescent material and a green fluorescent material.

3. The light emitting device of claim 1, further comprising a light homogenization device, for homogenizing the combined light of the wide-spectrum light and the monochromatic light and directing the homogenized light to the light splitting device, and
further comprising optionally a focusing lens, for focusing the combined light of the wide-spectrum light and the monochromatic light and directing the focused light to the light homogenization device.

4. The light emitting device of claim 1, wherein the wavelength conversion layer comprises at least two wavelength conversion materials which are formed as respective layers and arranged in a stack on the base board;
wherein the wavelength conversion layer optionally comprises a first wavelength conversion material emitting a first converted light and a second wavelength conversion material emitting a second converted light, wherein a peak wavelength of the first converted light is longer than that of the second converted light; and wherein the first wavelength conversion material and the second wavelength conversion material are arranged in a stack on the base board.

5. The light emitting device of claim 1, wherein at least two monochromatic lights comprise at least two lights selected from a group consisting of a red light, a green light and a blue light; and/or wherein one of the at least two monochromatic lights is a part of the excitation light which is not absorbed by the wavelength conversion layer.

6. The light emitting device of claim 1, wherein the wavelength conversion layer enables the excitation light to excite the wavelength conversion layer along a pre-defined path, wherein the wavelength conversion material of the wavelength conversion layer is uniform along the pre-defined path and wherein an intensity and a spectrum of the converted light generated from the wavelength conversion layer are uniform along the pre-defined path.

7. The light emitting device of claim 1, wherein the excitation light emitted from the excitation light source is stable in time.

8. The light emitting device of claim 1, further comprising a driving device for enabling the excitation light to move relative to the wavelength conversion layer,
wherein the driving device drives the wavelength conversion device to periodically rotate around a rotation axis, so that the excitation light periodically excites the wavelength conversion layer along a circular-shaped path which is concentric with the rotation axis; and/or wherein the driving device drives the wavelength conversion device to oscillate linearly, so that the excitation light excites the wavelength conversion layer repeatedly along a linear path.

9. The light emitting device of claim 1,wherein the wavelength conversion device further comprises a dichroic filter layer which is located on a surface of the wavelength conversion layer onto which the excitation light is incident, and wherein the dichroic filter layer transmits the excitation light and reflects the converted light.

10. The light emitting device of claim 1, wherein the wavelength conversion device further comprises a reflecting layer which is located on a surface of the wavelength conversion layer opposite the excitation light, and the light emitting device further comprises a reflecting cup and a light collection device, wherein a reflecting surface of the reflecting cup faces the reflecting layer, and the reflecting layer reflects the wide-spectrum light to the reflecting cup which then focuses the wide-spectrum light to an entrance of the light collection device, and wherein the light collection device guides the wide-spectrum light to the light splitting device.

11. The light emitting device of claim 10, wherein the reflecting cup comprises an opening through which the excitation light is incident onto the wavelength conversion layer; and/or wherein the reflecting cup is semi-sphere shaped, and a position of the wavelength conversion layer on which the excitation light is incident and the entrance position of the light collection device are symmetrical with respect to a center of the semi-sphere; and/or wherein the reflecting cup is semi-ellipsoid shaped, and a position of the wavelength conversion layer on which the excitation light is incident and the entrance position of the light collection device are two focus points of the semi-ellipsoid respectively.

12. The light emitting device of claim 1, wherein the light splitting device includes at least one dichroic filter which transmits a part of a spectral range of the wide-spectrum light and reflects another part of the spectral range of the wide-spectrum light; and/or wherein the monochromatic light generated by the auxiliary light source is a red light or a blue light.

13. A projection system, comprising the light emitting device of anyone of claim 1 to claim 12, wherein the monochromatic lights are primary color lights, the projection system further comprising:
at least two light modulation devices for respectively modulating the corresponding primary color lights emitted from the light splitting device;
a light combination device for combining the at least two primary color lights which are modulated by the light modulation devices.

## Patentansprüche

1. Lichtemittierende Vorrichtung, umfassend:
eine Anregungslichtquelle (901) zum Erzeugen eines Anregungslichts;
eine Wellenlängenumwandlungsvorrichtung (72), die eine Wellenlängenumwandlungsschicht (722) umfasst, die zumindest einen Teil des Anregungslichts in ein umgewandeltes Licht umwandelt, wobei das umgewandelte Licht entweder ein Licht mit einem breiten Spektrum ist oder das umgewandelte Licht mit einem Teil des Anregungslichts gemischt ist, der nicht von der Wellenlängenumwandlungsschicht umgewandelt wird, damit ein Licht mit einem breiten Spektrum entsteht;
eine Hilfslichtquelle (906), die ein monochromatisches Licht erzeugt;
einen dichroitischen Spiegel (905) mit einer ersten Seite und einer zweiten Seite, wobei der dichroitische Spiegel das Licht mit einem breiten Spektrum oder das von der Hilfslichtquelle erzeugte monochromatische Licht auf der ersten Seite empfängt und es durchlässt, und das jeweils andere Licht auf der zweiten Seite empfängt und es reflektiert, wobei das Licht mit einem breiten Spektrum und das monochromatische Licht zu einem kombinierten Licht kombiniert werden;
eine Lichtteilvorrichtung (62) zum Aufteilen des kombinierten Lichts in mindestens zwei monochromatische Lichter, die sich auf unterschiedlichen Wegen ausbreiten;
wobei die Wellenlängenumwandlungsvorrichtung ferner eine Grundplatte (721) umfasst und sich die Wellenlängenumwandlungsschicht auf der Grundplatte mit einem Luftspalt (723) dazwischen befindet.

2. Lichtemittierende Vorrichtung nach Anspruch 1, wobei das Licht mit einem breiten Spektrum ein weißes Licht oder ein gelbes Lichts ist; und/oder wobei das Anregungslicht ein Anregungslicht im Ultraviolettbereich oder nahen Ultraviolettbereich ist, und die Wellenlängenumwandlungsschicht mindestens zwei Materialien umfasst, die aus einer Gruppe ausgewählt sind, die aus einem roten fluoreszierenden Material, einem grünen fluoreszierenden Material, einem gelben fluoreszierenden Material und einem blauen fluoreszierenden Material besteht; und/oder wobei das Anregungslicht ein Anregungslicht im Ultraviolettbereich oder nahen Ultraviolettbereich ist, und die Wellenlängenumwandlungsschicht ein gelbes fluoreszierendes Material oder ein grünes fluoreszierendes Material umfasst; und/oder wobei das Anregungslicht ein blaues Anregungslicht ist und die Wellenlängenumwandlungsschicht ein rotes fluoreszierendes Material und ein grünes fluoreszierendes Material umfasst.

3. Lichtemittierende Vorrichtung nach Anspruch 1, ferner umfassend eine Lichthomogenisierungsvorrichtung zum Homogenisieren des kombinierten Lichts aus dem Licht mit einem breiten Spektrum und dem monochromatischen Licht und Richten des homogenisierten Lichts auf die Lichtteilvorrichtung, und
ferner umfassend gegebenenfalls eine Sammellinse zum Fokussieren des kombinierten Lichts aus dem Licht mit einem breiten Spektrum und dem monochromatischen Licht und Richten des fokussierten Lichts auf die Lichthomogenisierungsvorrichtung.

4. Lichtemittierende Vorrichtung nach Anspruch 1, wobei die Wellenlängenumwandlungsschicht mindestens zwei Wellenlängenumwandlungsmaterialien umfasst, die als jeweilige Schichten ausgebildet und als Stapel auf der Grundplatte angeordnet sind;
wobei die Wellenlängenumwandlungsschicht gegebenenfalls ein erstes Wellenlängenumwandlungsmaterial umfasst, das ein erstes umgewandeltes Licht emittiert, und ein zweites Wellenlängenumwandlungsmaterial, das ein zweites umgewandeltes Licht emittiert, wobei eine Spitzenwellenlänge des ersten umgewandelten Lichts länger ist als die des zweiten umgewandelten Lichts; und wobei das erste Wellenlängenumwandlungsmaterial und das zweite Wellenlängenumwandlungsmaterial als Stapel auf der Grundplatte angeordnet sind.

5. Lichtemittierende Vorrichtung nach Anspruch 1, wobei zumindest zwei monochromatische Lichter mindestens zwei Lichter umfassen, die aus einer Gruppe bestehend aus einem roten Licht, einem grünen Licht und einem blauen Licht ausgewählt sind; und/oder wobei zumindest eins der mindestens zwei monochromatischen Lichter ein Bestandteil des Anregungslichts ist, der nicht von der Wellenlängenumwandlungsschicht absorbiert wird.

6. Lichtemittierende Vorrichtung nach Anspruch 1, wobei die Wellenlängenumwandlungsschicht zulässt, dass das Anregungslicht die Wellenlängenumwandlungsschicht einen vordefinierten Weg entlang anregt, wobei das Wellenlängenumwandlungsmaterial der Wellenlängenumwandlungsschicht den vordefinierten Weg entlang einheitlich ist und wobei eine Intensität und ein Spektrum des von der Wellenlängenumwandlungsschicht erzeugten umgewandelten Lichts den vordefinierten Weg entlang einheitlich ist.

7. Lichtemittierende Vorrichtung nach Anspruch 1, wobei das von der Anregungslichtquelle emittierte Anregungslicht zeitstabil ist.

8. Lichtemittierende Vorrichtung nach Anspruch 1, ferner umfassend eine Antriebsvorrichtung, die ermöglicht, dass sich das Anregungslicht bezogen auf die Wellenlängenumwandlungsschicht bewegt,
wobei die Antriebsvorrichtung die Wellenlängenumwandlungsvorrichtung so antreibt, dass sie sich in regelmäßigen Abständen um eine Drehachse dreht, sodass das Anregungslicht die Wellenlängenumwandlungsschicht einen kreisförmig geformten Weg entlang in regelmäßigen Abständen anregt, der konzentrisch mit der Drehachse ist; und/oder wobei die Antriebsvorrichtung die Wellenlängenumwandlungsvorrichtung so antreibt, dass sie linear oszilliert, damit das Anregungslicht die Wellenlängenumwandlungsschicht einen linearen Weg entlang wiederholt anregt.

9. Lichtemittierende Vorrichtung nach Anspruch 1, wobei die Wellenlängenumwandlungsvorrichtung ferner eine dichroitische Filterschicht umfasst, die sich auf einer Oberfläche der Wellenlängenumwandlungsschicht befindet, auf die das Anregungslicht einfällt, und wobei die dichroitische Filterschicht das Anregungslicht durchlässt und das umgewandelte Licht reflektiert.

10. Lichtemittierende Vorrichtung nach Anspruch 1, wobei die Wellenlängenumwandlungsvorrichtung ferner eine reflektierende Schicht umfasst, die sich auf einer Oberfläche der Wellenlängenumwandlungsschicht gegenüber dem Anregungslicht befindet, und die lichtemittierende Vorrichtung ferner einen reflektierenden Becher und eine Lichtsammelvorrichtung umfasst, wobei eine reflektierende Oberfläche des reflektierenden Bechers der reflektierenden Schicht zugewandt ist, und die reflektierende Schicht das Licht mit einem breiten Spektrum zum reflektierenden Becher reflektiert, der dann das Licht mit einem breiten Spektrum auf einen Eintritt der Lichtsammelvorrichtung fokussiert, und wobei die Lichtsammelvorrichtung das Licht mit einem breiten Spektrum zur Lichtteilvorrichtung leitet.

11. Lichtemittierende Vorrichtung nach Anspruch 10, wobei der reflektierende Becher eine Öffnung umfasst, durch die das Anregungslicht auf die Wellenlängenumwandlungsschicht einfällt; und/oder wobei der reflektierende Becher halbkugelförmig ist, und eine Position der Wellenlängenumwandlungsschicht, auf die das Anregungslicht einfällt, und die Eintrittsposition der Lichtsammelvorrichtung bezogen auf eine Mitte der Halbkugel symmetrisch sind; und/oder wobei der reflektierende Becher halbellipsenförmig ist, und eine Position der Wellenlängenumwandlungsschicht, auf die das Anregungslicht einfällt, beziehungsweise die Eintrittsposition der Lichtsammelvorrichtung zwei Brennpunkte der Halbellipse sind.

12. Lichtemittierende Vorrichtung nach Anspruch 1, wobei die Lichtteilvorrichtung mindestens einen dichroitischen Filter aufweist, der einen Teil eines Spektralbereichs des Lichts mit einem breiten Spektrums durchlässt und einen anderen Teil des Spektralbereichs des Lichts mit einem breiten Spektrums reflektiert; und/oder wobei das von der Hilfslichtquelle erzeugte monochromatische Licht ein rotes Licht oder ein blaues Licht ist.

13. Projektionssystem, das die lichtemittierende Vorrichtung nach einem der Ansprüche 1 bis 12 umfasst, wobei die monochromatischen Lichter Primärfarbenlichter sind, wobei das Projektionssystem ferner Folgendes umfasst:
mindestens zwei Lichtmodulationsvorrichtungen zum jeweiligen Modulieren der entsprechenden Primärfarbenlichter, die von der Lichtteilvorrichtung emittiert werden;
eine Lichtkombinationsvorrichtung zum Kombinieren der mindestens zwei Primärfarbenlichter, die von den Lichtmodulationsvorrichtungen moduliert werden.

## Revendications

1. Dispositif électroluminescent, comprenant :
une source de lumière d'excitation (901) destinée à générer une lumière d'excitation ;
un dispositif de conversion de longueur d'onde (72) comprenant une couche de conversion de longueur d'onde (722) qui convertit au moins une partie de la lumière d'excitation en lumière convertie, ladite lumière convertie étant une lumière à large spectre, ou la lumière convertie étant mélangée à une partie de la lumière d'excitation non convertie par la couche de conversion de longueur d'onde pour former une lumière à large spectre ;
une source de lumière auxiliaire (906) générant une lumière monochromatique ;
un miroir dichroïque (905) ayant une première face et une deuxième face, ledit miroir dichroïque recevant la lumière à large spectre ou la lumière monochromatique générée par la source de lumière auxiliaire sur la première face et transmettant celle-ci, et
recevant l'autre lumière sur la deuxième face et réfléchissant celle-ci, la lumière à large spectre et la lumière monochromatique étant combinées pour former une lumière combinée ;
un dispositif de séparation de lumière (62) destiné à séparer la lumière combinée en au moins deux lumières monochromatiques se propageant sur des trajets différents ;
où le dispositif de conversion de longueur d'onde comprend en outre une carte de base (721), et la couche de conversion de longueur d'onde est présentée sur la carte de base, un interstice d'air (723) étant intercalé.

2. Dispositif électroluminescent selon la revendication 1, où la lumière à large spectre est une lumière blanche ou une lumière jaune ; et/ou où la lumière d'excitation est une lumière d'excitation ultra-violette ou proche de l'ultra-violet, et la couche de conversion de longueur d'onde comprend au moins deux matériaux sélectionnés dans un groupe comprenant un matériau fluorescent rouge, un matériau fluorescent vert, un matériau fluorescent jaune et un matériau fluorescent bleu ; et/ou où la lumière d'excitation est une lumière d'excitation ultra-violette ou proche de l'ultra-violet, et la couche de conversion de longueur d'onde comprend un matériau fluorescent jaune ou un matériau fluorescent vert ; et/ou où la lumière d'excitation est une lumière d'excitation bleue, et la couche de conversion de longueur d'onde comprend un matériau fluorescent rouge et un matériau fluorescent vert.

3. Dispositif électroluminescent selon la revendication 1, comprenant en outre un dispositif d'homogénéisation de lumière, destiné à homogénéiser la lumière combinée de la lumière à large spectre et la lumière monochromatique et à guider la lumière homogénéisée vers le dispositif de séparation de lumière, et comprenant en outre facultativement une lentille de focalisation destinée à focaliser la lumière combinée de la lumière à large spectre et la lumière monochromatique et à guider la lumière focalisée vers le dispositif d'homogénéisation de lumière.

4. Dispositif électroluminescent selon la revendication 1, où la couche de conversion de longueur d'onde comprend au moins deux matériaux de conversion de longueur d'onde formés comme couches respectives et disposés en pile sur la carte de base ;
où la couche de conversion de longueur d'onde comprend facultativement un premier matériau de conversion de longueur d'onde émettant une première lumière convertie et un deuxième matériau de conversion de longueur d'onde émettant une deuxième lumière convertie, où une longueur d'onde de crête de la première lumière convertie est supérieure à celle de la deuxième lumière convertie ; et où le premier matériau de conversion de longueur d'onde et le deuxième matériau de conversion de longueur d'onde sont disposés en pile sur la carte de base.

5. Dispositif électroluminescent selon la revendication 1, où au moins deux lumières monochromatiques comprennent au moins deux lumières sélectionnées dans un groupe comprenant une lumière rouge, une lumière verte et une lumière bleue ; et/ou où une des au moins deux lumières monochromatiques est une partie de la lumière d'excitation non absorbée par la couche de conversion de longueur d'onde.

6. Dispositif électroluminescent selon la revendication 1, où la couche de conversion de longueur d'onde rend possible l'excitation par la lumière d'excitation de la couche de conversion de longueur d'onde sur un trajet prédéfini, où le matériau de conversion de longueur d'onde de la couche de conversion de longueur d'onde est uniforme le long du trajet prédéfini et où une intensité et un spectre de la lumière convertie générée par la couche de conversion de longueur d'onde sont uniformes le long du trajet prédéfini.

7. Dispositif électroluminescent selon la revendication 1, où la lumière d'excitation émise par la source de lumière d'excitation est stable dans le temps.

8. Dispositif électroluminescent selon la revendication 1, comprenant en outre un dispositif d'entraînement permettant le déplacement de la lumière d'excitation par rapport à la couche de conversion de longueur d'onde,
le dispositif d'entraînement entraînant le dispositif de conversion de longueur d'onde en rotation périodique autour d'un axe de rotation, de sorte que la lumière d'excitation excite périodiquement la couche de conversion de longueur d'onde le long d'un trajet de forme circulaire concentrique à l'axe de rotation ; et/ou le dispositif d'entraînement entraînant le dispositif de conversion de longueur d'onde à osciller linéairement, de sorte que la lumière d'excitation excite la couche de conversion de longueur d'onde de manière répétée sur un trajet linéaire.

9. Dispositif électroluminescent selon la revendication 1, où le dispositif de conversion de longueur d'onde comprend en outre une couche de filtre dichroïque présentée sur une surface de la couche de conversion de longueur d'onde sur laquelle la lumière d'excitation est incidente, et où la couche de filtre dichroïque transmet la lumière d'excitation et réfléchit la lumière convertie.

10. Dispositif électroluminescent selon la revendication 1, où le dispositif de conversion de longueur d'onde comprend en outre une couche de réflexion présentée sur une surface de la couche de conversion de longueur d'onde opposée à la lumière d'excitation, et où le dispositif électroluminescent comprend en outre une coupelle réfléchissante et un dispositif collecteur de lumière, une surface de réflexion de la coupelle réfléchissante faisant face à la couche de réflexion, et la couche de réflexion réfléchissant la lumière à large spectre vers la coupelle réfléchissante, laquelle focalise ensuite la lumière à large spectre vers une entrée du dispositif collecteur de lumière, et le dispositif collecteur de lumière guidant la lumière à large spectre vers le dispositif de séparation de lumière.

11. Dispositif électroluminescent selon la revendication 10, où la coupelle réfléchissante comprend une ouverture par laquelle la lumière d'excitation est incidente sur la couche de conversion de longueur d'onde ; et/ou où la coupelle réfléchissante est de forme hémisphérique, et un emplacement de la couche de conversion de longueur d'onde où la lumière d'excitation est incidente et l'emplacement d'entrée du dispositif collecteur de lumière sont symétriques par rapport au centre de l'hémisphère ; et/ou où la coupelle réfléchissante est de forme semi-elliptique, et un emplacement de la couche de conversion de longueur d'onde où la lumière d'excitation est incidente et l'emplacement d'entrée du dispositif collecteur de lumière sont des points de focalisation respectifs de la semi-ellipse.

12. Dispositif électroluminescent selon la revendication 1, où le dispositif de séparation de lumière comprend au moins un filtre dichroïque transmettant une partie d'une plage spectrale de la lumière à large spectre et réfléchissant une autre partie de la plage spectrale de la lumière à large spectre ; et/ou où la lumière monochromatique générée par la source de lumière auxiliaire est une lumière rouge ou une lumière bleue.

13. Système de projection, comprenant le dispositif électroluminescent selon l'une quelconque des revendications 1 à 12, où les lumières monochromatiques sont des lumières de couleurs primaires, ledit système de projection comprenant en outre :
au moins deux dispositifs de modulation lumineuse pour des modulations respectives des lumières de couleurs primaires correspondantes émises par le dispositif de séparation de lumière ;
un dispositif de combinaison lumineuse pour la combinaison des au moins deux lumières de couleurs primaires modulées par les dispositifs de modulation lumineuse.
